# NEW EUROPEAN PATENT SPECIFICATION

(11) **EP 0 551 959 B2**
(45) Date of publication and mention of the opposition decision: **20.06.2001**
(45) Mention of the grant of the patent: 01.04.1998
(21) Application number: 93200106.8
(22) Date of filing: 15.01.1993
(51) Int. Cl.: A01J 7/00, A01J 5/017

(54) **An implement for automatically milking an animal**
Vorrichtung zum automatischen Melken eines Tieres
Dispositif de traite automatique d'un animal

(30) Priority: 17.01.1992 NL 9200091
(43) Date of publication of application: 21.07.1993
(60) Divisional application: 97201350.2
(73) Proprietor: MAASLAND N.V., 3155 PD Maasland (NL)
(72) Inventor: van der Lely, Cornelis, CH-6300 Zug (CH); van der Lely, Ary, NL-3155 PD Maasland (NL)
(74) Representative: Corten, Maurice Jean F.M.

(56) References cited:
- EP-A- 0 182 654
- EP-A- 0 221 733
- EP-A- 0 300 582
- EP-A- 0 332 232
- EP-A- 0 360 354
- EP-A- 0 385 539
- AU-B- 464 891
- FR-A- 1 524 568
- GB-A- 2 258 382
- US-A- 4 508 058
- US-A- 4 516 530
- US-A- 4 941 433

## Description

The invention relates to an implement for automatically milking animals, as described in the preamble of claim 1.

Such an implement is known from EP-A1-0300582. In the implement described in that document, the teat cups are provided with a connection arm that is arranged pivotably to a connection member. The connection member is connected to the end of a cord, so that this connection member is pulled up against a flat teat cup carrier which is arranged at the end of the robotarm. The above mentioned implement has the disadvantage that each teat cup is provided with a connection arm and a connection member, which makes the teat cup rather big, while it is furthermore a complex construction. Furthermore the connection arm and the connection member form obstacles during the connection and disconnection of the teat cups from the teat. Milk- and vacuum tubes as well as the cords could easily be entangled in said members.

In order to realize a simple construction of the teat cups, the implement as described in the opening paragraph is characterized by the features as defined in the characterizing part of claim 1. By these measures the teat cups are modified only to a minimum while the dimension of the teat cups is not changed. Only connection points for the flexible members have to be applied to the teat cups.

Particularly, any vacuum in a teat cup can be stopped independently of any vacuum in the other teat cups when the milk flow in the relevant teat cup has stopped or has fallen below to a predetermined value. By these measures it will be possible to uncouple each teat cup from a relevant teat independent whether the milk flow from the other teats has been stopped or fallen below to a predetermined level or not.

For a better understanding of the invention and to show how the same may be carried into effect, reference will now be made, by way of example, to the accompanying drawings, in which:
Figure 1 is a plan view of a milking parlour comprising a milking robot, in which the outlines of an animal, in the present case a cow, are shown;
Figure 2 is a view of the milking robot, taken in the direction of arrow II-II in Figure 1;
Figure 3 is a plan view of an enlarged part of the robot arm, on which the teat cups are disposed;
Figure 4 is a side view, taken in the direction of arrow IV in Figure 3;
Figure 5 is a plan view in accordance with Figure 3, in which is schematically shown the position of the teat cups relative to the robot arm and their connection thereto during milking of an animal;
Figure 6 is a side view, taken in the direction of arrow VI in Figure 5;
Figure 7 is a cross-sectional view, taken on line VII-VII in Figure 3;
Figure 8 is a side view in accordance with Figure 6 of an alternative design of the connection of the teat cups to the robot arm;

In the drawings, corresponding components have been given the same reference numerals. The invention is in no way limited to the embodiments illustrated and described here; they only serve as an illustration of the inventive idea.

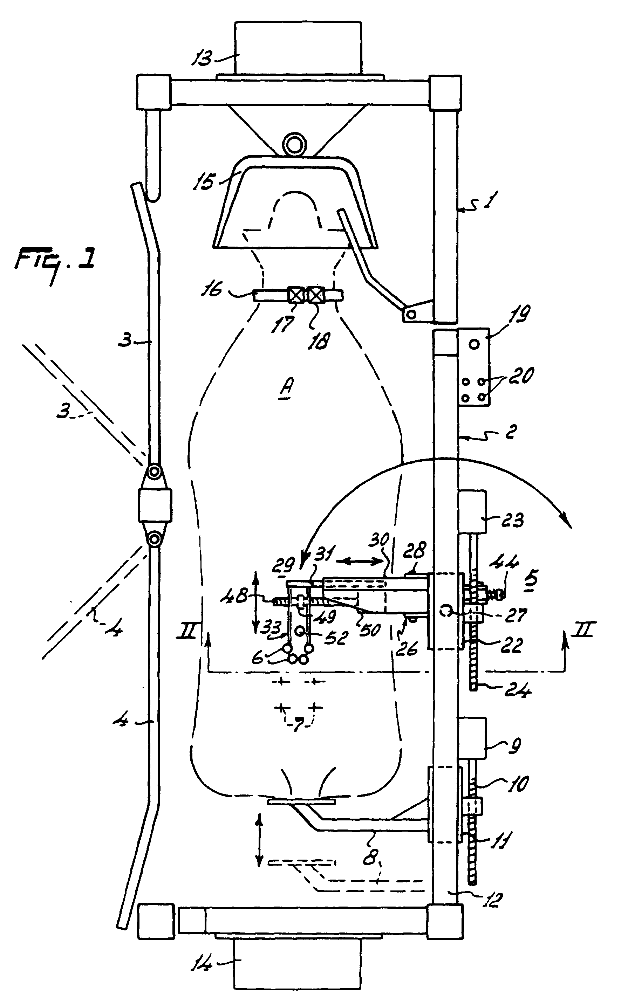

Figure 1 shows a milking parlour in which, inside a railing consisting of the front railing portion 1, the rear railing portion 2 and the railing doors 3 and 4, an animal, in the present case a cow A, is present. The milking parlour includes a milking robot 5, by means of which the teat cups 6 can be connected to the schematically shown teats 7 of the udder of the cow A. For a rough determination of the starting position, the milking robot co-operates with a contacting member 8. The contacting member 8 can be moved with the aid of a stepper motor 9, a threaded spindle 10 connected thereto and a straight guide member 11 to over a horizontal carrier 12 which forms part of the rear railing portion 2. Such a carrier 12 can alternatively be provided against or next to an existing railing. The milking parlour comprises a computer system 13 which controls an automatic feeder. The computer system 13 of the automatic feeder operates independently of a computer system 14 for the milking robot and, each time it detects, identifies and moreover accepts an animal A in the milking parlour, it can deposit a quantity of fodder matched to the animal in a feed trough 15 attached to the front railing portion 1.

The animal is provided with a collar 16, to which two separate indication and information members 17 and 18 are attached. These members each separately supply control signals to the two computer systems 13, 14 and contribute to an independent action of both computers. The milking parlour is further provided with an indicator device 19 for measuring the milk flow coming from a teat 7 of the udder of the animal A. For each of the teats a warning light 20 is present, which lights up when it is determined via a sensor in a teat cup 6 or in the milk line 21 of a cup 6 that the milk flow has stopped or decreased to below a predetermined value. The indicator device 19 may alternatively be designed such that it has two warning lights for the milk flow from each teat 7, one warning light emitting green light during milking and the other one emitting red light when the milk flow from a related teat has decreased to below the preset threshold value. In a still further design, the indicator is an acoustic device in the form of a buzzer.

In the longitudinal direction of the milking parlour, i.e. in the direction of the imaginary line between head and tail of the animal A in the milking parlour, the milking robot 5 is slidably disposed on a horizontal carrier 12 which forms part of the rear railing portion 2. For that purpose, the milking robot 5 comprises a straight guide member 22, a stepper motor 23 driving a threaded spindle 24, which engages the straight guide member 22. The stepper motor 23 is controlled by the computer 14 of the milking robot.

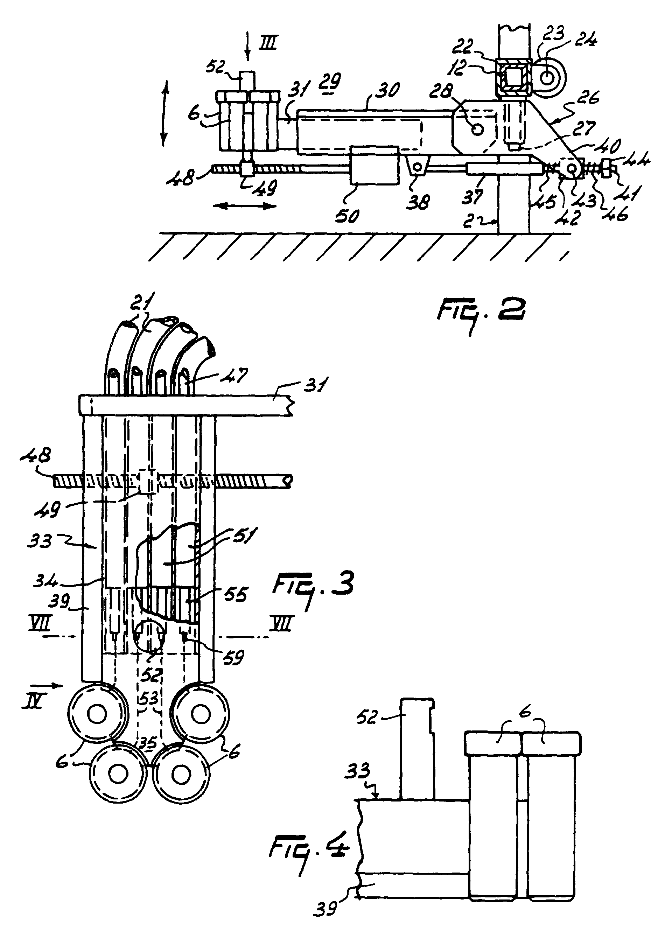

Figure 2 shows at the bottom side of the straight guide member 22 a holder 26 which is arranged pivotably about a vertical shaft 27 connected to the straight guide member 22. A telescopic arm 29, consisting of a rigid portion 30 and a portion 31 slidable therein, is attached to the holder 26 capably of pivoting about a horizontal shaft 28. A carrier member 33 for the teat cups 6 is disposed at a square angle on the end of the slidable arm portion 31. The teat cups 6 are, seen in plan view, arranged in a V-form on the carrier member 33. The carrier member 33 includes a chamber portion 34 and a contacting member portion 35, which in this construction are one integral whole. The slidable arm portion and the teat cups attached thereto can be moved relative to the rigid arm portion 30 with the aid of a threaded spindle 48 which meshes with a threaded element 49 at the bottom side of the carrier member 33. The threaded spindle 48 is driven by a stepper motor 50, which is controlled by the computer system 14 of the milking robot 5.

Relative to the holder 26, the arm 29 is supported and activated pivotably by means of an adjusting cylinder 37. The piston rod thereof acts near the midway point of the rigid arm portion 30 on a horizontal shaft 38 connected between two lugs to the rigid arm portion. The adjusting cylinder 37 is located in the extension of the arm 29 and, in this situation, extends under the end of the vertical shaft 27 to a holder arm 40 of the holder 26. The cylinder portion of the adjusting cylinder 37 is supported relative to the holder arm 40 via a rod 41 which is provided in the extension of the cylinder and is passed through a bore in a block 42, which block 42 is connected pivotably to the holder arm 40 via horizontal stub axles 43. The end of the sliding rod 41, which is provided with thread, is fitted with an adjusting nut 44. Disposed between the cylinder portion of the adjusting cylinder 37 and the block 42 is a pressure spring 45, and a second pressure spring 46 is disposed between the adjusting nut 44 and the block 42.

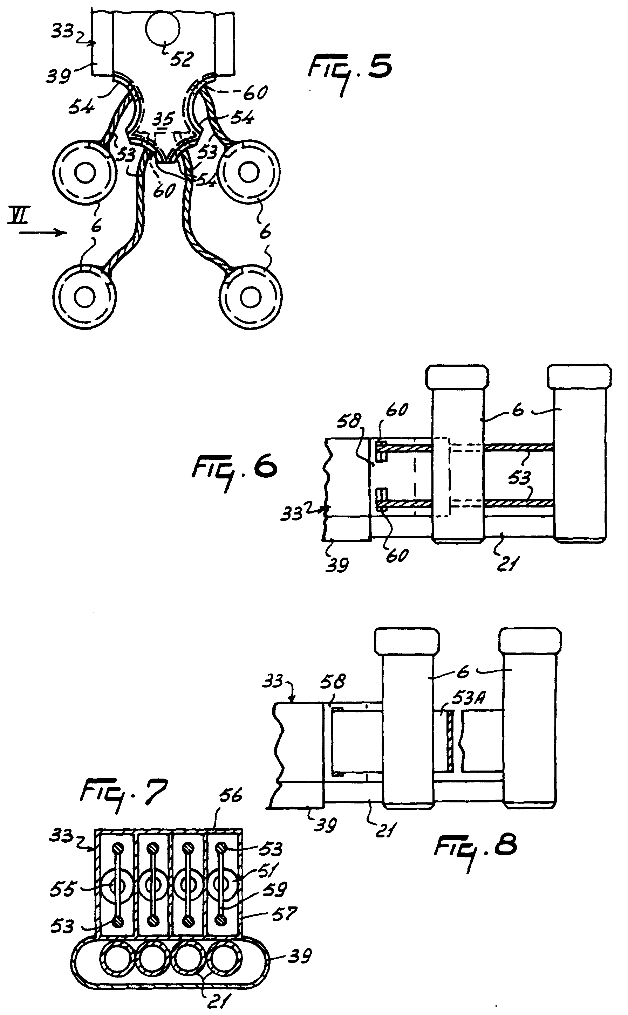

Figures 3 and 4 show a laser device 52 on the carrier member 33. The computer of the milking robot 5 determines the position of the carrier member 33, and consequently the position of the teat cups 6, with the aid of a laser device 52 which is disposed on the carrier member 33, projects to over the teat cups and supplies the computer 14 with signals on the basis of reflected radiation, so that the position of the teats 7 with respect to the carrier member 33 can be determined. The laser device 52 is positioned, seen with respect to the udder of the animal A near the teat cups arranged at the head end of the animal, on an imaginary perpendicular centre line, directed transversely to the arm 29, between the four teat cups. The leading teat cups 6 are spaced apart from each other by a smaller distance than the trailing pair of teat cups, so that each centre of a teat cup 6 indicates a point for the lines of an imaginary arrow tip which, in a plan view, is directed towards the udder.

In the chamber portion 34 of the carrier member 33 there are located, at a square angle to the arm 29, four rigidly arranged cylinders 51 which are pneumatically or hydraulically operable via supply lines 47. Connected to the piston rod 55 of each of the cylinders 51 is a flexible member 53, 53A, which is connected to a teat cup 6. In the rest position, the piston rod 55 of a cylinder 51 is retracted that far that a teat cup 6 is pulled up against a surface of contact 54 on the contacting portion 35 of the carrier member 33.

Figures 5, 6 and 8 show the configuration of the teat cups 6 during milking. In these drawings, the flexible member 53, 53A is not tightened, so that the milked animal A can move free from and to the robot arm 30. A surface of contact 54 has a curvature which at least substantially corresponds to the circumferential curvature of a teat cup 6. A surface of contact 54 is provided on the carrier member 33, which is in the form of an approximately square tube 34. The flexible member 53, 53A is preferably disposed between upright walls of the tube, so that, when it is tightened, a stable contact of the cup 6 with the contacting portion 35 is obtained in all circumstances. In the present embodiment, the surface of contact 54 is constituted by a wall 58 which closes the tube 34 and in which one or a plurality of apertures 60 for the flexible member 53, 53A are made. The apertures 60 are of a conical shape, so that the flexible member 53, 53A can smoothly be pulled through the apertures 60 at different angles. A flexible member 53, 53A is connected to a piston rod 55 via an intermediate member 59. The intermediate member may have the shape of an isosceles triangle, the intermediate member 59 being connected to the piston rod 55 near the apex angle of the said triangular shape. In accordance with a first design as shown in Figure 6, a flexible member can consist of two cables or cords 53 of a suitable flexible material, which cables 53 have one end connected in a lateral direction, i.e. to an upright wall of a teat cup 6. The other end may be attached to the intermediate member 59. In accordance with an alternative design as shown in Figure 8, the flexible member consists of a strip or belt 53A which extends in an upwardly directed plane.

Figure 7 shows, in a cross-sectional view, at the bottom side of the bottom wall 57 of the carrier member 33 a flattened tube 39, through which for the purpose of protection the milk hoses 21 of the teat cups 6 are passed. Such a tube 39, through which also further lines may be passed, prevents the robot arm 29 from being caught on obstacles, if any, by means of its lines and wires.

Although the teat cups 6 can be held against or onto the carrier member 33 by means of the cylinders 51, they can also be held against or onto the carrier member 33 by means of on/off switchable electromagnets. These electromagnets are mounted on the carrier member, e.g. near the surfaces of contact 54, and are individually operable. Particularly, they can be switched on together, while they can be switched off individually. The electromagnets work together with the cylinders 51. The cylinders 51 are able to pull up the teat cups 6 against or onto the carrier member 33 by means of one or more cables 53 or by means of the belt 53A, while the electromagnets are able to hold the teat cups against or onto the carrier member 33. With the aid of the computer 14, control signals can be generated which cause an off-switching of the electromagnet for a relevant teat cup 6 when said teat cup is to be attached to a teat, and an on-switching of said electromagnet when this teat cup has to be uncoupled from the relevant teat and be reconnected to the carrier member 33. The control signals can also provoke an activating of the cylinder 51 of this teat cup 6 for a predetermined time interval as soon as the teat cup 6-has to be uncoupled from said teat. After an electromagnet for a relevant teat cup is switched off, said teat cup is moved upwardly and sucked around a respective teat by means of a partial vacuum generated in said teat cup 6.

The method of operation of the milking robot will now be described hereinafter.

The carrier member has four teat cups 6 which are connected to a carrier member 33 via flexible members 53, 53A. Taken in a direction from the rear, from left to right the teats might be numbered as follows: rear left D1, rear right D2, front left D3 and front right D4.

After the location of the teats 7 has been determined by the laser device 52 or another type of detector, the cups 6 move to the udder of the animal A. The teat cup for teat D1 is, for example, connected first. As soon as the cup 6 has been connected to the teat 7 and the milking operation has started, the air pressure in the pneumatic adjusting cylinder 51 of this teat cup 6 stops and the teat cup 6 then becomes freely movable relative to the carrier member 33. If an electromagnet has been used for the connection, the electric current is at that moment switched off from the electromagnet. Thereafter the carrier member 33 automatically moves to teat D2, where the same action occurs. This coupling method is repeated also for the teats D3 and D4. During milking, the teat cups 6 are flexibly connected to the robot arm 29 by means of the milk hoses 21 and the flexible members 53, 53A. This flexible connection is advantageous for the milk yield. The flexibility of the teat cup 6 connected to the teat 7 is still further increased if the robot arm 29 is moved by one or more hydraulic or pneumatic cylinders and if the pressure on the oil or of the air in the cylinders, which determine the location of the robot arm, is removed. Very advantageously, the connected teat cups 6 can also move in all directions in this manner.

In addition, the free motion of a connected teat cup 6 is promoted by the light and possibly flexible material, of which the carrier member 33 and the robot arm 29 have been made. The weight of this material is low and the mass forces are low.

When a teat 7 does not or practically not produce milk any more, the underpressure in the teat cup 6 automatically disappears and simultaneously or substantially simultaneously the flexible members 53, 53A pull the teat cup 6 into its seat, i.e. its surface of contact 54, at the carrier member 33. This rapid drop of the underpressure in the teat cup 6 and the withdrawal of the teat cup are beneficial to a low somatic cell count of the milk. The risk of illnesses, such as mastitis, is reduced thereby and milking is more agreeable to the animal. After all the teats have been milked, the robot arm rotates through approximately 180° to a position outside the milking station and the cow can leave the milking parlour.

A computer 13, which controls the feeding system and makes any further information available, is disposed near the feed trough. This computer 13 can, for example, control the quantity of fodder served to the cow in the feed trough. The cow has a collar 16 which forms part of cow-identification means. Two indication-information members 17, 18 are attached to the collar 16 of the cow A. The one information member co-operates with the computer-controlled feeding system. The other information member co-operates with the computer 14, which is provided near the rear side of the cow A and manages the process control of the milking robot 5. When the feeding system and the milking system comprising the said milking device 5 and the computer 14, are mounted completely or partly separately, the advantage is obtained that supplies and repair operations of the individual systems are easier to perform and an automatic milking system can be used in a simple manner in addition to an existing feeding system. The cow-identification means are provided with a first microprocessor unit in which the relevant data for the fodder supply of an animal to be milked is stored, a second microprocessor unit in which the relevant data for the milking process of an animal to be milked is stored and with a transceiver system. The indication-information member 17 includes the first microprocessor unit with the transceiver system and is able to communicate with the transceiver system of the computer system for feeding the animal. The indication-information member 18 includes the second microprocessor with the first mentioned transceiver system and is able to communicate with the transceiver system of the computer system for controlling the milking robot 5 and the automatic milking. The pressure springs 45, 46 provided in the robot arm produce a flexible up and down motion, whereby the weight of a teat cup 6 and carrier member 33 is reduced. The up and down motion of the teat cup 6 can, as shown, be effected pneumatically. Furthermore, a stepper motor can adjust the length of the telescopic robot arm 29. The stepper motor structures can be replaced by hydraulic or pneumatic cylinders or suchlike structures. By means of the above-described straight guide members 22, 29 provided along and transversely to the milking parlour and by the pivotal motion about the shaft 28, a teat cup 6, mounted at the end of the robot arm, can be moved upwardly, downwardly and laterally and at the same time in all directions, after activation of the relevant stepper motor and/or adjusting cylinder.

The milking implement can still function adequately if two teats of the cow are adjacent to each other spaced apart by only a few centimetres, e.g. 2 cms, as, for example, the rearmost teat cups D1 and D2 are located in the initial position very closely to each other on their carrier member 33. This arrangement is important for a milking robot 5 which must always operate, also during the night, without any supervision.

The milking implement, comprised of a number of teat cups 6 which are connectable to a number of teats 7 of an animal, such as a cow A, is preferably used in a stable with freely moving cows or a similar such accommodation. The milking system comprising the said milking and cleaning implements and the computer 14, and the feeding system can then be of an automatic type and be designed such that the computers 13, 14 controlling the milking system and the feeding system allow a cow to enter the milking parlour, in accordance with the sequence in which she is recorded in the computer.

In addition, the milking system and the feeding system can be automated and designed such that the computers 13, 14 controlling the milking system and the feeding system ensure that a cow which is at the beginning of a lactation period is given priority, as regards her entrance to the milking parlour, over cows which are at the end of the lactation period. Therefor the implement can be provided with register means for registering the lactation period of the animals. Particularly, these register means are forming part of the second microprocessor unit of the cow-identification means, in which microprocessor unit the further relevant data for the milking process of the animal to be milked is stored. The computer system for controlling the milking robot can comprise a special programme to ensure that the animals which are at the beginning of a lactation period are given priority for entering the milking parlour over animals which are not at the beginning of the lactation period.

The milking system and the feeding system may also be of such an automated construction and so designed that the computers 13, 14 controlling the milking system and the feeding system allow cows A into the milking parlour in accordance with serial numbers such as A1, A2, A3, A4, A5 etc., assigned to the cows A.

It is furthermore possible to milk a cow A in a stable with freely moving cows or a similar accommodation automatically, independently of an optional recording in a computer 14 controlling the system of the instant at which each cow was milked and independently of a predetermined period of time elapsed since the cow was milked last.

The invention is not limited to the features described in the foregoing with reference to the accompanying drawings, but also relates to all the details which have not been described but are shown in the drawings and defined in the claims. The invention also relates to all sorts of modifications of the embodiment, of course being within the protective scope of the accompanying claims.

## Claims

1. An implement for automatically milking animals, comprising a milking robot (5) with a carrier member (33), which carrier member (33) is provided with a sensor device (52) for determining the position of the teats and is adapted to carry a number of teat cups (6) which are automatically connectable to the teats of an animal, which carrier member (33) is further provided with surfaces of contact (54) which extend at the side of and around the end portion of the carrier member (33) in substantially vertical direction, against which surfaces of contact (54) the teat cups (6) can be pulled up in a, seen in plan view, V-formed configuration, and the sensor device (52) is mounted in front of the opening of the V of the in V-form arranged teat cups (6), characterized in that the sensor device (52) comprises a laser while the surfaces of contact (54) have a curvature which at least substantially corresponds to the circumferential curvature of a teat cup (6), while furthermore said a teat cup (6) is connected to the carrier member (33) in such a way that, during milking, it can move to all directions to a relatively large distance relative to the carrier member (33), whilst remaining fixed thereto by means of a flexible member (53, 53A) which, during milking, is hanging freely.

2. An implement as claimed in claim 1, characterized in that the laser device (52) is rotatable and mounted on the carrier member (33) relative to the in V-form arranged teat cups (6) in such a manner that the position of all the teats can be determined by means of said laser device (52) in order to connect the teat cups (6) individually one after another.

3. An implement as claimed in claim 1 or 2, characterized in that the surfaces of contact (54) for the teat cups (6) to be connected to the hindmost teats are located at the end portion of the carrier member (33) and the surfaces of contact (54) for the teat cups (6) to be connected to the foremost teats are located at the side portions of the carrier member (33).

4. An implement as claimed in any one of the preceding claims, characterized in that, when the milk flow in a teat cup (6) has stopped or has fallen below to a predetermined value, a computer (14) activates the reconnection of the teat cup (6) to the carrier member (33) simultaneously or substantially simultaneously with the stopping of any vacuum in the teat cup.

5. An implement as claimed in claim 4, characterized in that any vacuum in a teat cup (6) can be stopped independently of any vacuum in the other teat cups (6) when the milk flow in the relevant teat cup (6) has stopped or has fallen below a predetermined value.

6. An implement as claimed in claim5, characterized in that the time between the stopping of the milk flow in a teat cup (6) or the falling of the milk flow in a teat cup (6) below a predetermined value on the one hand and the stopping of any vacuum in this teat cup (6) on the other hand is adjustable.

7. An implement as claimed in any one of claims 4-6, characterized in that the implement includes an indicator device, e.g. constituted by an acoustic device or by lights, by means of which an indication can be given when the milk flow in a teat cup has stopped or has fallen below a predetermined value.

8. An implement as claimed in any one of the preceding claims, characterized in that the milking robot (5) is provided with two horizontal guide members (22, 31) which are arranged approximately transversely relative to each other and by means of which the carrier member (33) is displaceable under the udder of an animal to be milked in such a manner that the teat cups (6) can be connected to the teats.

9. An implement as claimed in claim8, characterized in that the displacement of the carrier member (33) by means of the guide members (22, 31) is controlled by threaded spindles (24, 48).

10. An implement as claimed in claim 8 or 9, characterized in that the teat cup (6) can be individually moved upwardly relative to the carrier member (33) pneumatically or hydraulically, while during milking the pressure on the pneumatic or hydraulic cylinders is withdrawn.

## Patentansprüche

1. Vorrichtung zum automatischen Melken von Tieren, die einen Melkroboter (5) mit einem Träger (33) aufweist, der mit einem Sensor (52) zum Ermitteln der Position der Zitzen versehen und zum Tragen einer Anzahl von Zitzenbechern (6) ausgebildet ist, die automatisch an die Zitzen eines Tieres anzuschließen sind, wobei der Träger (33) ferner Anlageflächen (54) aufweist, die sich an den Seiten und am Ende des Trägers (33) in im wesentlichen vertikaler Richtung erstrecken, und gegen die die Zitzenbecher (6) in - in Draufsicht - V-förmiger Anordnung zu ziehen sind, und wobei der Sensor (52) vor der Öffnung des V der V-förmig angeordneten Zitzenbecher (6) angeordnet ist,
dadurch gekennzeichnet, daß der Sensor (52) einen Laser aufweist und die Anlageflächen (54) eine Krümmung haben, die zumindest im wesentlichen der Umfangskrümmung eines Zitzenbechers (6) entspricht, wobei ferner der Zitzenbecher (6) mit dem Träger (33) derart verbunden ist, daß er während des Melkvorganges in bezug auf den Träger (33) in allen Richtungen über eine relativ große Distanz zu bewegen ist und dabei mit dem Träger durch ein flexibles Verbindungsglied (53, 53A) verbunden bleibt, das während des Melkvorganges frei durchhängt.

2. Vorrichtung nach Anspruch 1,
dadurch gekennzeichnet, daß der Laser (52) drehbar und relativ zu den V-förmig angeordneten Zitzenbechern (6) an dem Träger (33) derart angeordnet ist, daß mittels des Lasers (52) die Position aller Zitzen zu ermitteln ist, um die Zitzenbecher (6) nacheinander einzeln anzuschließen.

3. Vorrichtung nach Anspruch 1 oder 2,
dadurch gekennzeichnet, daß die Anlageflächen (54) für die an die hinteren Zitzen anzuschließenden Zitzenbecher (6) am Ende des Trägers (33) und die Anlageflächen (54) für die an die vorderen Zitzen anzuschließenden Zitzenbecher (6) an den Seiten des Trägers (33) angeordnet sind.

4. Vorrichtung nach einem der vorhergehenden Ansprüche,
dadurch gekennzeichnet, daß bei Versiegen des Milchflusses in einem Zitzenbecher (6) oder Unterschreiten eines vorgegebenen Wertes ein Rechner (14) gleichzeitig oder im wesentlichen gleichzeitig mit dem Abschalten des Vakuums in dem Zitzenbecher den Wiederanschluß des Zitzenbechers (6) an den Träger (33) bewirkt.

5. Vorrichtung nach Anspruch 4,
dadurch gekennzeichnet, daß das Vakuum in einem Zitzenbecher (6) unabhängig von dem Vakuum in den anderen Zitzenbechern (6) abzuschalten ist, wenn der Milchfluß in dem betreffenden Zitzenbecher (6) versiegt ist oder einen vorgegebenen Wert unterschritten hat.

6. Vorrichtung nach Anspruch 5,
dadurch gekennzeichnet, daß der Zeitraum zwischen dem Versiegen des Milchflusses in einem Zitzenbecher (6) oder dem Unterschreiten eines vorgegebenen Wertes des Milchflusses in einem Zitzenbecher (6) einerseits und dem Abschalten des Vakuums in diesem Zitzenbecher (6) andererseits einstellbar ist.

7. Vorrichtung nach einem der Ansprüche 4 bis 6,
dadurch gekennzeichnet, daß die Vorrichtung eine Anzeigeeinrichtung wie z. B, eine akustische Einrichtung oder Lampen, umfaßt, durch die angezeigt wird, wenn der Milchstrom in einem Zitzenbecher versiegt ist oder einen vorgegebenen Wert unterschritten hat.

8. Vorrichtung nach einem der vorhergehenden Ansprüche,
dadurch gekennzeichnet, daß der Melkroboter (5) zwei horizontale Gleitführungen (22, 31) aufweist, die annähernd rechtwinklig zueinander angeordnet sind, und über die der Träger (33) unter dem Euter eines zu melkenden Tieres derart verschiebbar ist, daß die Zitzenbecher (6) an die Zitzen anzuschließen sind.

9. Vorrichtung nach Anspruch 8,
dadurch gekennzeichnet, daß die Verschiebung des Trägers (33) mittels der Führungen (22, 31) durch Gewindespindeln (24, 48) gesteuert ist.

10. Vorrichtung nach Anspruch 8 oder 9,
dadurch gekennzeichnet, daß der Zitzenbecher (6) pneumatisch oder hydraulisch relativ zu dem Träger (33) einzeln nach oben zu bewegen ist, wobei während des Melkens die pneumatischen oder hydraulischen Zylinder vom Druck entlastet werden.

## Revendications

1. Dispositif de traite automatique d'animaux, comprenant un robot de traite (5) ayant un organe de support (33), cet organe de support (33) étant pourvu d'un dispositif capteur (52) servant à déterminer la position des tétines, et étant adapté de façon à supporter un certain nombre de gobelets trayeurs (6) qui sont susceptibles d'être reliés automatiquement aux tétines d'un animal, cet organe de support (33) étant en outre pourvu de surfaces de contact (54) qui s'étendent sur le côté de, et autour de, la partie d'extrémité de l'organe de support (33), dans une direction sensiblement verticale, surfaces de contact (54) contre lesquelles les gobelets trayeurs peuvent être tirés afin de présenter, en vue en plan, une configuration en forme de V, et le dispositif capteur (52) est monté à l'avant de l'ouverture du V des gobelets trayeurs (6) agencés en forme de V, caractérisé en ce que le dispositif capteur (52) comprend un laser, tandis que les surfaces de contact (54) présentent une incurvation qui correspond au moins sensiblement à l'incurvation circonférentielle d'un gobelet trayeur (6) et tandis que de plus ledit gobelet trayeur (6) est relié à l'organe de support (33) de manière que, durant la traite, il puisse se déplacer dans toutes les directions sur une distance relativement grande par rapport à l'organe de support (33), tout en restant fixe par rapport à ce dernier, au moyen d'un organe flexible (53, 53A) qui, durant la traite, est suspendu librement.

2. Dispositif selon la revendication 1, caractérisé en ce que le dispositif laser (52) est rotatif et monté sur l'organe de support (33) par rapport aux gobelets trayeurs (6) agencés en forme de V, de manière que la position de toutes les tétines puisse être déterminée au moyen dudit dispositif laser (52), en vue de relier les gobelets trayeurs (6) individuellement, les uns après les autres.

3. Dispositif selon la revendication 1 ou 2, caractérisé en ce que les surfaces de contact (54) destinées aux gobelets trayeurs (6) devant être reliés aux tétines se trouvant le plus à l'arrière sont disposées sur la partie d'extrémité de l'organe de support (33), et les surfaces de contact (54) destinées aux gobelets trayeurs (6) devant être reliés aux tétines se trouvant le plus à l'avant sont disposées sur les parties latérales de l'organe de support (33).

4. Dispositif selon l'une quelconque des revendications précédentes, caractérisé en ce que, lorsque l'écoulement de lait dans un gobelet trayeur (6) s'est arrêté ou est descendu au-dessous d'une valeur prédéterminée, un ordinateur (54) active la reconnexion du gobelet trayeur (6) à l'organe de support (33) simultanément ou sensiblement simultanément avec l'arrêt de toute aspiration dans le gobelet trayeur.

5. Dispositif selon la revendication 4, caractérisé en ce que toute aspiration exercée dans un gobelet trayeur (6) peut être arrêté indépendamment de toute aspiration exercée dans les autres gobelets trayeurs (6), lorsque l'écoulement de lait dans le gobelet trayeur (6) correspondant s'est arrêté ou a chuté au-dessous d'une valeur prédéterminée.

6. Dispositif selon la revendication 5, caractérisé en ce que la durée entre l'arrêt de l'écoulement de lait dans un gobelet trayeur (6) ou la chute de l'écoulement de lait dans un gobelet trayeur (6) au-dessous d'une valeur prédéterminée, d'une part, et l'arrêt de toute aspiration dans ce gobelet trayeur (6), d'autre part, est réglable.

7. Dispositif selon l'une quelconque des revendications 4 à 6, caractérisé en ce qu'il comprend un dispositif indicateur, constitué par exemple d'un dispositif acoustique ou de voyants, au moyen desquels une indication peut être donnée lorsque l'écoulement de lait dans un gobelet trayeur s'est arrêté ou a chuté au-dessous d'une valeur prédéterminée.

8. Dispositif selon l'une quelconque des revendications précédentes, caractérisé en ce que le robot de traite (5) est pourvu de deux organes de guidage (22, 31) horizontaux qui sont agencés à peu près transversalement l'un par rapport à l'autre et au moyen desquels l'organe de support (33) est déplaçable au-dessous du pis d'un animal à traire, de manière que les gobelets trayeurs (6) puissent être reliés aux tétines.

9. Dispositif selon la revendication 8, caractérisé en ce que le déplacement de l'organe de support (33) au moyen des organes de guidage (22, 31) est commandé par des tourillons filetés (24, 48).

10. Dispositif selon la revendication 8 ou 9, caractérisé en ce que le gobelet trayeur (6) peut être déplacé individuellement vers le haut par rapport à l'organe de support (33), de manière pneumatique ou hydraulique, tandis que, durant la traite, la pression exercée sur les vérins pneumatiques ou hydrauliques est éliminée.
